# EUROPÄISCHE PATENTSCHRIFT

(11) **EP 4 206 621 B1**
(45) Veröffentlichungstag und Bekanntmachung des Hinweises auf die Patenterteilung: **13.03.2024**
(21) Anmeldenummer: 21218423.8
(22) Anmeldetag: 31.12.2021
(51) Int. Cl.: G01G 21/28

(54) **LADENWAAGE**
COUNTER SCALE
BALANCE DE COMPTOIR

(43) Veröffentlichungstag der Anmeldung: 05.07.2023
(73) Patentinhaber: Bizerba SE & Co. KG, 72336 Balingen (DE)
(72) Erfinder: BUHL, Steffen, 72474 Winterlingen (DE); SAUTER, Daniel, 72461 Albstadt (DE)
(74) Vertreter: Huber, Meik

(56) Entgegenhaltungen:
- DE-A1-102009 049 567
- DE-A1-102011 083 562
- DE-U1-202011 050 040

## Beschreibung

Die vorliegende Erfindung betrifft eine Waage, insbesondere eine Ladenwaage, mit einem Wägemodul. Das Wägemodul umfasst ein Gehäuse, in dem eine Wägezelle untergebracht ist. Die Wägezelle umfasst einen festen Abschnitt, einen Verformungsabschnitt und einen beweglichen Abschnitt. Der feste Abschnitt ist mit dem Gehäuse verbunden und der bewegliche Abschnitt trägt ein Lastkreuz mit einer Lastplatte. Der Verformungsabschnitt weist einen Dehnungsmesstreifen zur Messung eines auf die Lastplatte wirkenden Gewichts auf. Derartige Waagen sind dem Fachmann gut bekannt. Diese Waagen umfassen in aller Regel ein Bedienerdisplay zur Interaktion mit der Waage, zum Beispiel zum Anzeigen eines Gewichts oder zum Anzeigen von Fehlfunktionen. Dabei muss der Bediener durch verschiedene Menüebenen navigieren, um bestimmte Informationen über den Zustand der Waage zu erhalten. Dies ist für den Bediener oft aufwändig und wenig intuitiv.

Das Dokument DE 20 2011 050040 U1 offenbart eine Waage nach dem Oberbegriff des Anspruchs 1.

Aufgabe der Erfindung ist es, eine einfache Vorrichtung zu schaffen, die den Bediener über den Zustand der Waage in Kenntnis setzt und ihm die Interaktion mit der Waage erleichtert.

Diese Aufgabe wird durch eine Waage mit den Merkmalen des Anspruchs 1 gelöst.

Erfindungsgemäß wird eine Waage, insbesondere eine Ladenwaage vorgeschlagen. Die Waage umfasst ein Wägemodul. Das Wägemodul umfasst ein Gehäuse, in dem eine Wägezelle untergebracht ist. Die Wägezelle umfasst einen festen Abschnitt, einen Verformungsabschnitt und einen beweglichen Abschnitt. Der feste Abschnitt ist mit dem Gehäuse verbunden. Der bewegliche Abschnitt trägt ein Lastkreuz mit einer Lastplatte. Der Verformungsabschnitt weist einen Dehnungsmesstreifen zur Messung eines auf die Lastplatte wirkenden Gewichts auf. Das Gehäuse ist einstückig und wannenförmig ausgebildet. An der Außenwand des einstückigen Gehäuses ist ein Leuchtband im Wesentlichen umlaufend am Gehäuse angebracht. Im Wesentlichen umlaufend in diesem Zusammenhang meint, dass das Leuchtband drei Seiten und einen großen Teil der vierten Seite des Gehäuses umläuft, jedoch dass der Anfang und das Ende des Leuchtbandes nicht verbunden oder zusammentreffen müssen. Ein Abstand zwischen Anfang und Ende des Leuchtbandes, auf der Seite, auf der sich Anfang und Ende begegnen, ist damit ebenfalls gemeint. Die Waage umfasst eine Steuereinheit mit einer Zustandsmaschine, die mindestens einen technischen Zustand der Waage abbildet, wobei die Steuereinheit das Leuchtband aufgrund des Zustands der Zustandsmaschine ansteuert. In einer Ausführungsform ist der technische Zustand, der durch die Zustandsmaschine abgebildet wird, ein Papiervorrat in einem Drucker. In einer Ausführungsform ist der technische Zustand, der durch die Zustandsmaschine abgebildet wird, eine Differenz zu einem Sollgewicht, die durch das durch die Wägezelle ermittelte Gewicht und das Sollgewicht gebildet wird. In einer Ausführungsform ist der technische Zustand, der durch die Zustandsmaschine abgebildet wird, ein veralteter Softwarestand, der durch Updates aktualisiert werden muss. In einer Ausführungsform ist der technische Zustand, der durch die Zustandsmaschine abgebildet wird, eine Geschwindigkeit verschiedener Gewichtserfassungsschritte oder über ein Bedienerdisplay eingegebener Bearbeitungsschritte. In einer Ausführungsform ist der technische Zustand, der durch die Zustandsmaschine abgebildet wird, dass sich ein Bediener korrekt an der Waage über das Bedienerdisplay identifiziert hat.

Der Fachmann versteht unter einem einstückig und wannenförmig ausgebildeten Gehäuse eine Form eines Gehäuses, die einer Wanne ähnelt. Sie hat eine quadratische oder rechteckige Grundfläche, wobei die Ecken abgerundet sein können. Das Gehäuse hat einen Grundkörper, der in einer Ausführungsform aus einem Metallguss hergestellt ist und somit auch komplexe Formen, insbesondere Öffnungen und innere Wandungen aufweisen kann. Die Länge und die Breite des Gehäuses sind wesentlich größer als dessen Höhe. Das Gehäuse umfasst eine Bodenplatte mit seitlichen Wänden, die einstückig an der Bodenplatte ausgebildet sind. Das Gehäuse ist oben offen und mit einem Freiraum im Inneren, um unterschiedliche Module, wie die Wägezelle, elektronische Module und Anderes im Inneren des Gehäuses aufzunehmen. In einer Ausführungsform ist der Innenbereich des Gehäuses oben mit einer Abdeckung abgedeckt. Unter den Begriff einstückig und wannenförmig fällt auch ein Gehäuse, das im Inneren Trennwände für verschiedene Räume oder Stabilisierungsstreben hat. Des Weiteren fällt auch ein Gehäuse darunter, dessen Bodenplatte an einigen Stellen stufenförmig ausgebildet ist, so dass an diesen Stellen des Gehäuses unterhalb der Bodenplatte des Gehäuses ein Freiraum entsteht, wenn der Grundkörper auf einer ebenen Fläche abgesetzt wird. Dieser Freiraum dient zum Beispiel für das Anbringen von Steckern unterhalb des Gehäuses. Das Gehäuse ist auch dann als einstückig und wannenförmig zu verstehen, wenn an verschiedenen Stellen in der, insbesondere abgestuften, Bodenplatte oder seitlichen Wänden Durchgangsöffnungen vorhanden sind, zum Beispiel für das Anbringen von Steckerbuchsen, das Durchführen von Kabeln oder die Montage von Trägern und anderen Elementen der Waage. Der Begriff wannenförmig ist deswegen nur als beschreibend für das grundsätzliche Erscheinungsbild des Gehäuses anzusehen.

In einer Ausführungsform umläuft das Leuchtband das Gehäuse einmal, insbesondere umläuft das Leuchtband das Gehäuse im oberen Bereich seiner Seitenwände einmal, wobei zwischen Anfang und Ende des Leuchtbandes ein, im Verhältnis zur Länge des Leuchtbandes, kleiner Abstand sein kann. Dabei umfasst die Waage eine Lastplatte, die auf dem Lastkreuz abgelegt ist. Dabei führen die äußeren Ränder der Lastplatte über das Lastkreuz und über die Oberkante des Gehäuses nach unten, so dass die Lastplatte wie ein Deckel auf der Oberseite des Gehäuses schwebt. In einer Ausführungsform befindet sich das Leuchtband im oberen Bereich der Seitenwände des Gehäuses, jedoch unterhalb der Ränder der Lastplatte. In einer Ausführungsform ist das Leuchtband am oberen Rand des Gehäuses derart angebracht, dass es von den überstehenden Rändern der Lastplatte verdeckt wird. In diesem Fall leuchtet das Licht des Leuchtbandes diffus unter den nach unten stehenden Rändern der Lastplatte hervor.

In einer Ausführungsform besteht das Leuchtband aus einem flexiblen Träger. Auf dem flexiblen Träger sind die LED-Leuchtmittel angeordnet. In einer Ausführungsform umfasst der Träger eine bis zehn LED-Leuchtmittel pro cm Länge.

In einer Ausführungsform sind in dem flexiblen Trägermaterial des Leuchtbandes elektrische Leitungen für die Ansteuerung der LED-Leuchtmittel integriert.

In einer Ausführungsform erzeugen die LED-Leuchtmittel Licht im Wellenlängenbereich von 230 nm bis 500 nm. Der Träger mit den LED-Leuchtmitteln ist mit Phosphor überzogen. Insbesondere ist das Leuchtband auf der Seite, auf der die LED-Leuchtmittel angebracht sind, mit Phosphor überzogen. Phosphor wandelt das blaue oder ultraviolette Licht der LED-Leuchtmittel in weißes Licht.

Es ist insbesondere zu beachten, dass nicht jedes der LED-Leuchtmittel einzeln und separat mit Phosphor überzogen ist bzw. wurde, sondern dass die LED-Leuchtmittel zuerst auf dem Träger montiert werden und dann die ganze Seite des Trägers mit Phosphor überzogen wird. So kann die Dichte der LED-Leuchtmittel pro Länge des Leuchtbandes deutlich erhöht werden und es kommt zu einem sehr homogenen Leuchteffekt. Dies führt auch dazu, dass die Ausleuchtung durch das Licht der LED-Leuchtmittel im Bezug zur Ebene des Leuchtbandes ca. 170° beträgt, das heißt, das Licht ist auch aus sehr spitzen Winkeln wahrnehmbar.

In einer Ausführungsform umfasst der flexible Träger erste, zweite und dritte LED-Leuchtmittel. Die ersten LED-Leuchtmittel erzeugen Licht in einem Wellenlängenbereich von 450°nm bis 500°nm. Die zweiten LED-Leuchtmittel erzeugen Licht in einem Wellenlängenbereich von 500°nm bis 570°nm. Die dritten LED-Leuchtmittel erzeugen Licht in einem Wellenlängenbereich 610°nm bis 760°nm. Die ersten, zweiten und dritten LED-Leuchtmittel sind in regelmäßigen Anordnungen auf dem Träger angeordnet. Die ersten LED-Leuchtmittel bilden eine erste Gruppe von LED-Leuchtmitteln. Die zweiten LED-Leuchtmittel bilden eine zweite Gruppe von LED-Leuchtmitteln. Die dritten LED-Leuchtmittel bilden eine dritte Gruppe von LED-Leuchtmitteln. Die LED-Leuchtmittel einer Gruppe werden durch die Steuereinheit jeweils gemeinsam angesteuert. In einer Ausführungsform ist das Leuchtband auf der Seite, auf der die LED-Leuchtmittel angebracht sind, mit Silikon überzogen. Silikon ist lichtdurchlässig. Gleichzeitig entsteht ein diffuser Effekt, so dass das Licht der einzelnen LED-Leuchtmittel etwas gestreut wird. So entstehen aus den drei Gruppen von LED-Leuchtmitteln, die für das menschliche Auge als blau, grün und rot wahrnehmbar sind, überlagerte Farben, so dass annähernd der gesamte RGB Farbraum zur Verfügung steht.

In einer Ausführungsform weist der flexible Träger auf der den LED-Leuchtmitteln gegenüberliegenden Seite eine Schicht aus Klebematerial auf. In einer Ausführungsform handelt es sich um eine Schicht aus wärmeleitendem Klebematerial. Das Leuchtband ist mit dem Klebematerial am Gehäuse angebracht, insbesondere angeklebt. Die durch die LED-Leuchtmittel entstehende Hitze wird über die Schicht aus Klebematerial, insbesondere über das wärmeleitende Klebematerial, an das Gehäuse abgegeben.

Das Klebematerial haftet dabei auf einer Fläche aus unbeschichtetem und/oder beschichtetem Metallguss, sodass das Gehäuse an der Stelle, an der das Leuchtband angeklebt wird, beschichtet oder unbeschichtet sein kann.

In einer Ausführungsform ist das Leuchtband mit der Steuereinheit elektrisch verbunden. Das Leuchtband wird von der Steuereinheit mit einer Gleichspannung im Bereich von 6°Volt bis 36°Volt, insbesondere 12°Volt oder 24°Volt, angesteuert.

In einer Ausführungsform umfasst das Gehäuse eine Aussparung oder eine einseitige Aussparung, die im oberen Gehäusebereich an der Außenseite des Gehäuses umlaufend angebracht ist, in die das Leuchtband eingeklebt ist. Unter Aussparung ist dabei eine Vertiefung in der Gehäusewand zu verstehen in der Form einer Rille. Eine einseitige Aussparung meint eine Kante, die zum Beispiel in einer schräg verlaufenden Gehäusewand vorhanden ist. Die Kante bildet eine Vertiefung, deren hinteres Ende zur Aufnahme des Leuchtbandes eine vertikale Ebene ist.

In einer Ausführungsform umfasst die Waage einen Diffusor, der außen am Gehäuse angebracht ist und die Aussparung abdeckt. Der Diffusor sorgt für eine Streuung des Lichtes der LED-Leuchtquellen, sodass nicht mehr zu erkennen ist, dass es sich um diskrete Lichtquellen handelt, sondern dass der Eindruck entsteht, es würde sich um eine ausgedehnte homogene Lichtquelle handeln. Außerdem sorgt der Diffusor dafür, dass das Leuchtband aus jedem Betrachtungswinkel gleich hell wirkt. Der Diffusor verstärkt den Effekt des Phosphors beziehungsweise des Silikons.

In einer Ausführungsform besteht der Diffusor aus einem transluzenten Material. In einer Ausführungsform handelt es sich bei dem transluzenten Material um ein transluzentes Polycarbonat.

In einer Ausführungsform umfasst der Diffusor auf seiner Außenseite eine Strukturierung. Die Strukturierung macht den Diffusor von der Außenseite in Richtung Gehäuse blickdicht. Hingegen ist der Diffusor von der Gehäuseseite nach außen transluzent.

In einer Ausführungsform ist der Diffusor als Ring ausgebildet. Der Ring hat die Abmessungen des Gehäuses im Bereich der Aussparung. Der Ring ist formschlüssig an dem Gehäuse über der Aussparung angebracht. Insbesondere ist der Ring mit einem Rastmechanismus angebracht. In einer Ausführungsform deckt der Diffusor die Aussparung ab. In einer Ausführungsform ist der Diffusor mit dem Gehäuse verklebt oder verschraubt.

In einer Ausführungsform ist die Distanz zwischen den LED-Leuchtmitteln und der Innenseite des Diffusors kleiner 3°mm. In einer Ausführungsform ist die Distanz zwischen den LED-Leuchtmitteln und der Innenseite des Diffusors kleiner 1°mm.

Einige Ausführungsformen der Erfindung sind in den Zeichnungen beispielhaft gezeigt und nachfolgend beschrieben. Es zeigen, jeweils in schematischer Darstellung:
- Fig. 1: Eine erfindungsgemäße Ladenwage in einer ersten Ausführungsform,
- Fig. 2: Eine erfindungsgemäße Ladenwage in einer zweiten Ausführungsform,
- Fig. 3: Einen Ausschnitt einer erfindungsgemäßen Ladenwaage.

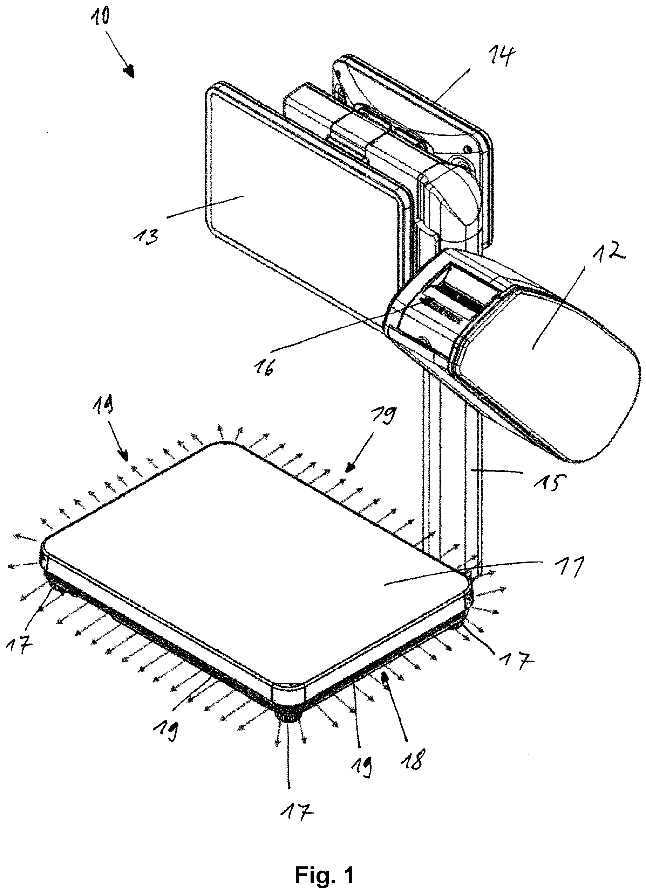

Fig. 1 zeigt eine erfindungsgemäße Waage 10 nach einer ersten Ausführungsform. Die Waage umfasst einen Wägemodul mit einem Gehäuse 18, in dem eine Wägezelle untergerbacht ist. Die Wägezelle trägt ein Lastkreuz, das seinerseits eine Lastplatte 11 trägt. Die Lastplatte 11 hat einen nach unten stehenden Rand, der über die obere Kante des Gehäuses 18 ragt. Am Wägemodul ist ein Stativ 15 befestigt, das einen Drucker 12 mit einer Etikettenausgabe 16 trägt. Das Stativ 15 trägt ferner ein Bedienerdisplay 13, das als Touchscreen ausgebildet ist, und ein dem Bedienerdisplay 13 gegenüberliegendes Kundendisplay 14. Das Wägemodul ruht auf vier in seinen Ecken angebrachten Füßen 17. An äußeren Rand des Gehäuses 18 ist umlaufend ein Leuchtband 19 angebracht, das von einer Steuereinheit in Abhängigkeit eines technischen Zustands der Waage angesteuert wird.

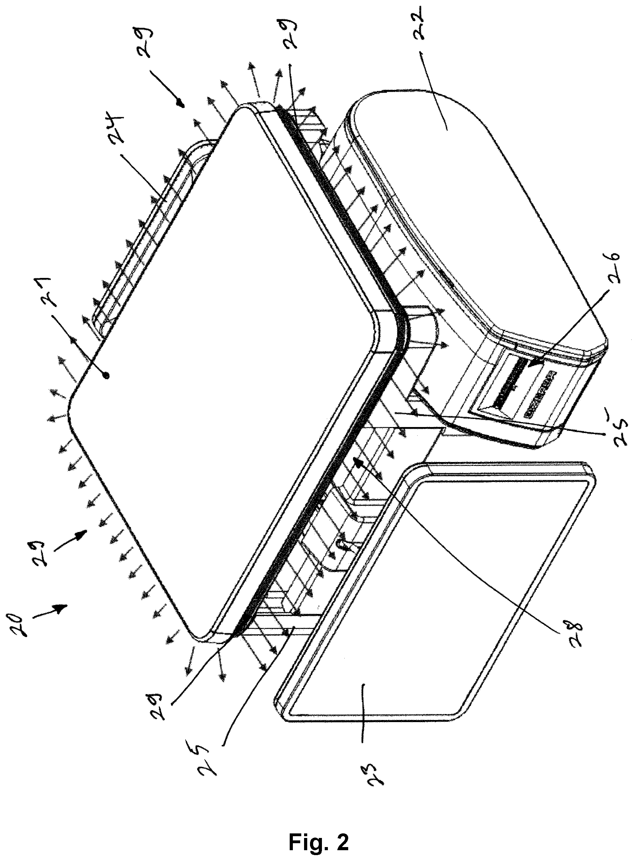

Fig. 2 zeigt eine erfindungsgemäße Waage 20 nach einer zweiten Ausführungsform. Die Waage umfasst einen Wägemodul mit einem Gehäuse 28, in dem eine Wägezelle untergerbacht ist. Die Wägezelle trägt ein Lastkreuz, das seinerseits eine Lastplatte 21 trägt. Die Lastplatte 21 hat einen nach unten stehenden Rand, der über die obere Kante des Gehäuses 28 ragt. Das Wägemodul ruht auf einem Gestell 25, das einen Drucker 22 mit einer Etikettenausgabe 26 trägt. Das Gestell 25 trägt ferner ein Bedienerdisplay 23, das als Touchscreen ausgebildet ist, und ein dem Bedienerdisplay 23 gegenüberliegendes Kundendisplay 24. An äußeren Rand des Gehäuses 28 ist umlaufend ein Leuchtband 29 angebracht, das von einer Steuereinheit in Abhängigkeit eines technischen Zustands der Waage angesteuert wird.

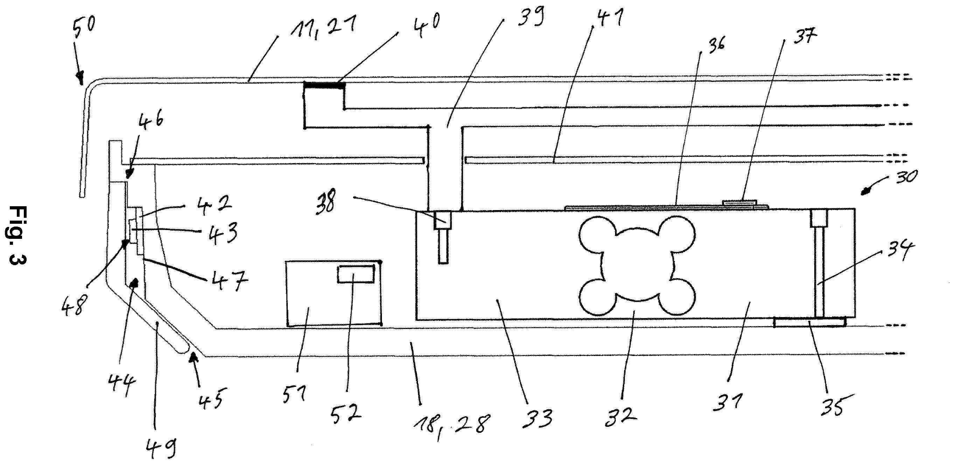

Fig. 3 zeigt einen Schnitt durch das Gehäuse 18, 28 einer Waage 10, 20. Das Gehäuse 18, 28 ist ein Metallgussgehäuse und kann komplexe Formen annehmen. Im Inneren des Gehäuses 18, 28 ist auf einem Sockel 35 eine Wägezelle 30 mit Schrauben 34 verschraubt. Die Wägezelle 30 umfasst einen mit dem Gehäuse 18, 28 verschraubten festen Abschnitt 31, einen Verformungsabschnitt 32 und einen beweglichen Abschnitt 33, auf dem ein Lastkreuz 39 mit einer Befestigung 38 angebracht ist. Das Lastkreuz 39 trägt die Lastplatte 11, 21 der Waage, wobei zwischen Lastkreuz 39 und Lastplatte 11, 21 Gummipuffer 40 angebracht sind. Die Lastplatte 11, 21 umfasst an ihren Rändern eine Biegung 50, so dass die Lastplatte 11, 21 seitlich nach unten über die oberen Ränder des Gehäuses 18, 28 ragt. Die Gewichtskraft eines Produkts auf der Lastplatte 11, 21 und auch die Gewichtskraft von Lastkreuz 39 und Lastplatte 11, 21 selbst wirken so auf den beweglichen Abschnitt 33 der Wägezelle 30. Dies führt zu einer mechanischen Verformung des Verformungsabschnitts 32, welche über auf dem Verformungsabschnitt 32 angebrachte Dehnungsmesstreifen 36 gemessen wird. Die gemessene Verformung wird mit einer Auswerteeinheit 37 bestimmt und in einen Gewichtswert des Produkts umgerechnet. Der Innenraum des Gehäuses 18, 28, in dem sich die Wägezelle 30 und auch eine Steuereinheit 51 und ggf. weitere Komponenten der Waage wie Netzteil und ähnliches befinden, ist mit einer Abdeckung 41 abgedeckt.

Das Gehäuse 18, 28 besteht aus einer Bodenplatte und vier nach oben ragenden Seitenwänden. Das Gehäuse ist aus Metallguss und somit einstückig ausgebildet. Der Übergang zwischen Bodenplatte und Seitenwänden ist angeschrägt. Im oberen Bereich der Seitenwände ist eine Aussparung 44 angebracht, so dass eine vertikal stehende Außenwand 47 an den Seitenwänden des Gehäuses 18, 28 etwas zurückversetzt ist. An dieser vertikal stehenden Außenwand 47 ist der Träger 42 des Leuchtbandes 19, 29 festgeklebt. Der Träger 42 ist aus flexiblem Material gebildet und kann somit auch um die Ecken des Gehäuses 18, 28 in der Aussparung 44 geführt werden. Flexibel meint in diesem Zusammenhang, dass der Träger 42 zumindest senkrecht zur Ebene, in der der Träger 42 verläuft, verbogen werden kann, nicht gezwungenermaßen auch in der Ebene des Trägers 42 selbst. Auf dem Träger 42 sind LED-Leuchtmittel 43 abgebracht. Die LED-Leuchtmittel 43 können in Längsrichtung des Trägers 42 mit einer Dichte von bis zu zehn LED-Leuchtmittel 43 pro cm angebracht sein. Träger 42 und LED-Leuchtmittel 43 sind auf der Seite der LED-Leuchtmittel mit einer Schutzschicht 48 aus Silikon oder Phosphor abgedeckt. Dabei ist die Schutzschicht 48 nicht nur auf den LED-Leuchtmitteln 43 selbst vor deren Montage auf dem Träger 42 angebracht, sondern wird nach der Montage der LED-Leuchtmittel 43 auf dem Träger 42 über den Trägers 42 und die LED-Leuchtmittel 42 angebracht. So kann eine höhere Dichte der LED-Leuchtmittel 43 auf dem Träger 42 erreicht werden und der Abstrahlwinkel für homogenes Licht jedes LED-Leuchtmittels 43 erhöht sich auf ca. 170°. Eine Schutzschicht 48 aus Silikon wird aufgetragen, wenn die LED-Leuchtmittel 43 Licht im Wellenlängenbereich von 450°nm bis 500°nm, 500°nm bis 570°nm beziehungsweise 610°nm bis 760°nm erzeugen und die unterschiedlichen LED-Leuchtmittel 43 in regelmäßigen Anordnungen auf dem Träger 42 angeordnet sind. Hierdurch kann das Leuchtband 19, 29 in RGB Farben über die Steuereinheit 51 zum Leuchten gebracht werden. Eine Schutzschicht 48 aus Phosphor wird aufgetragen, wenn die LED-Leuchtmittel 43 Licht im Wellenlängenbereich von 230 nm bis 500 nm (ultraviolettes bis blaues Licht) abgeben. Durch die Schutzschicht 48 aus Phosphor wird dieses Licht für den Bediener als weißes Licht sichtbar.

Die Aussparung 44 mit Träger 42, LED-Leuchtmitteln 43 und Schutzschicht 48 ist durch einen Diffusor 49 abgedeckt. Der Diffusor 49 bietet einen mechanischen Schutz des Leuchtbandes 19, 29 und bricht das Licht gleichzeitig, so dass das Leuchtband 19, 29 wie eine homogene Lichtquelle wirkt. Dazu kann der Diffusor 49 auf seiner äußeren Fläche strukturiert, das heißt oberflächenbearbeitet sein. Der Effekt, dass das Leuchtband 19, 29 wie eine homogene Lichtquelle wirkt, wird durch die hohe Dichte an LED-Leuchtmitteln 43 und durch die gemeinsame Schutzschicht 48 aus Silikon oder Phosphor auf den LED-Leuchtmitteln 43 hervorgerufen und durch den Diffusor 49 und die außenseitige Strukturierung des Diffusors 49 verstärkt bzw. vervollständigt. Der Diffusor 49 liegt an Flächen 45, 46 des Gehäuses 18, 28 oberhalb und unterhalb der Aussparung 44 an und ist an diese Flächen 45, 46 geklebt, mit einer Rastverbindung daran verrastet oder verschraubt. Der Diffusor 49 ist ein ringförmiges Bauteil, das von unten über das Gehäuse 18,28 geschoben wird und formschlüssig auf die Seitenwände des Gehäuses 18, 28 passt. Der Diffusor 49 ist aus transluzentem Material, insbesondere aus transluzentem Polycarbonat, hergestellt.

Die Steuereinheit 51 umfasst eine Zustandsmaschine 52, die mindestens einen technischen Zustand der Waage abbildet. Die Steuereinheit steuert das Leuchtband 19, 29 aufgrund des Zustandes der Zustandsmaschine 52.

Der technische Zustand, der durch die Zustandsmaschine abgebildet wird, kann ein Papiervorrat in einem Drucker sein, eine Differenz zu einem Sollgewicht, die durch das durch die Wägezelle ermittelte Gewicht und das Sollgewicht gebildet wird, ein veralteter Softwarestand, der durch Updates aktualisiert werden muss, eine Geschwindigkeit verschiedener Gewichtserfassungsschritte oder über ein Bedienerdisplay eingegebener Bearbeitungsschritte oder dass sich ein Bediener korrekt an der Waage über das Bedienerdisplay identifiziert hat. Je nachdem, in welchem Zustand sich die Zustandsmaschine aufgrund verschiedener Eingangsparameter von Wägezelle, Sensoren oder der Waagensteuerung befindet, kann eine Ansteuerung des Leuchtbandes zum Beispiel in verschiedenen Farben (rot, gelb, grün) bei einem RGB Leuchtband oder als leuchtend bzw. blinkend bei einem monochromen Leichtband erfolgen.

Die Funktionen verschiedener in den Zeichnungen gezeigter Elemente, inklusive der Funktionsblöcke, können durch dezidierte Hardware oder durch generische Hardware, die in der Lage ist, Software auszuführen, im Zusammenhang mit der entsprechenden Software, realisiert werden. Falls die Funktionen mittels eines Prozessors zur Verfügung gestellt werden, können sie durch einen einzigen dezidierten Prozessor, einen einzigen geteilten Prozessor oder mehrere generische Prozessoren, die wiederum geteilt sein können, zur Verfügung gestellt werden. Die Funktionen können, ohne Einschränkung, durch einen digital signal processor (DSP), Netzwerk Prozessor, application specific integrated circuit (ASIC), field programmable gate array (FPGA), read only memory (ROM) mit gespeicherter Software, random access memory (RAM), und nichtflüchtige Speicher zur Verfügung gestellt werden.

## Patentansprüche

1. Waage (10, 20), insbesondere Ladenwaage, mit einem Wägemodul, wobei das Wägemodul ein Gehäuse (18, 28) umfasst, in dem eine Wägezelle (30) untergebracht ist, wobei die Wägezelle (30) einen festen Abschnitt (31), einen Verformungsabschnitt (32) und einen beweglichen Abschnitt (33) umfasst, wobei der feste Abschnitt (31) mit dem Gehäuse (18, 28) verbunden ist und der bewegliche Abschnitt (33) ein Lastkreuz (39) mit einer Lastplatte (11, 21) trägt, wobei der Verformungsabschnitt (32) einen Dehnungsmesstreifen (36) zur Messung eines auf die Lastplatte (11, 21) wirkenden Gewichts aufweist, **dadurch gekennzeichnet, dass** das Gehäuse (18, 28) einstückig und wannenförmig ausgebildet ist, wobei an der Außenwand (47) des Gehäuses ein Leuchtband (19, 29) angebracht ist, das im Wesentlichen umlaufend am Gehäuse (18, 28) angebracht ist, und dass die Waage eine Steuereinheit (51) umfasst, die eine Zustandsmaschine (52) umfasst, die mindestens einen technischen Zustand der Waage abbildet, wobei die Steuereinheit (51) das Leuchtband (19, 29) aufgrund des Zustands der Zustandsmaschine (52) ansteuert.

2. Waage, insbesondere Ladenwaage, nach Anspruch 1, wobei das Leuchtband aus einem flexiblen Träger (42,) besteht, auf dem die LED-Leuchtmittel (43) angeordnet sind, wobei der Träger (42) insbesondere eine bis zehn LED-Leuchtmittel (43) pro cm Länge umfasst.

3. Waage, insbesondere Ladenwaage, nach Anspruch 2, **dadurch gekennzeichnet, dass** in dem flexiblen Träger (42) des Leuchtbandes (19, 29) elektrische Leitungen für die Ansteuerung der LED-Leuchtmittel (43) integriert sind.

4. Waage, insbesondere Ladenwaage, nach Anspruch 2 oder 3, **dadurch gekennzeichnet, dass** die LED-Leuchtmittel (43) Licht im Wellenlängenbereich von 230 nm bis 500 nm erzeugen und insbesondere mit Phosphor überzogen sind, wobei insbesondere das Leuchtband (19, 29) auf der Seite, auf der die LED-Leuchtmittel (43) angebracht sind, mit Phosphor überzogen ist.

5. Waage, insbesondere Ladenwaage, nach Anspruch 2 oder 3, **dadurch gekennzeichnet, dass** der flexible Träger (42) erste, zweite und dritte LED-Leuchtmittel (43) umfasst, die Licht im Wellenlängenbereich von 450°nm bis 500°nm, 500°nm bis 570°nm beziehungsweise 610°nm bis 760°nm erzeugen und die ersten, zweiten und dritten LED-Leuchtmittel (43) in regelmäßigen Anordnungen auf dem Träger angeordnet sind, wobei die ersten, zweiten und dritten LED-Leuchtmittel (43) jeweils als Gruppe gemeinsam angesteuert werden, und wobei insbesondere das Leuchtband auf der Seite, auf der die LED-Leuchtmittel (43) angebracht sind, mit Silikon überzogen ist.

6. Waage, insbesondere Ladenwaage, nach einem der Ansprüche Anspruch 1 bis 5, **dadurch gekennzeichnet, dass** der flexible Träger (42) auf der den LED-Leuchtmitteln (43) gegenüberliegenden Seite eine Schicht aus Klebematerial, insbesondere eine Schicht aus wärmeleitendem Klebematerial aufweist, wobei das Leuchtband mit dem Klebematerial am Gehäuse angebracht, insbesondere angeklebt ist.

7. Waage, insbesondere Ladenwaage, nach Anspruch 6, **dadurch gekennzeichnet, dass** das Gehäuse (18, 28) aus einem Metallguss hergestellt ist und das Klebematerial auf einer Fläche aus unbeschichtetem und/oder beschichtetem Metallguss haftet.

8. Waage, insbesondere Ladenwaage, nach einem der Ansprüche 1 bis 7, **dadurch gekennzeichnet, dass** das Leuchtband (19, 29) mit der Steuereinheit (51) elektrisch verbunden ist und das Leuchtband von der Steuereinheit mit einer Gleichspannung im Bereich von 6°Volt bis 36°Volt, insbesondere 12°Volt oder 24°Volt angesteuert wird.

9. Waage, insbesondere Ladenwaage, nach einem der Ansprüche 1 bis 8, **dadurch gekennzeichnet, dass** das Gehäuse eine Aussparung oder eine einseitige Aussparung (44) umfasst, die im oberen Gehäusebereich (18, 28) an der Außenseite (47) des Gehäuses (18, 28) umlaufend angebracht ist, in die das Leuchtband (19, 29) eingeklebt ist.

10. Waage, insbesondere Ladenwaage, nach Anspruch 9, **dadurch gekennzeichnet, dass** die Waage einen Diffusor (49) umfasst, der außen am Gehäuse angebracht ist und die Aussparung (44) abdeckt.

11. Waage, insbesondere Ladenwaage, nach Anspruch 10, **dadurch gekennzeichnet, dass** der Diffusor (49) aus einem transluzenten Material, insbesondere aus transluzentem Polycarbonat, besteht.

12. Waage, insbesondere Ladenwaage, nach Anspruch 11, **dadurch gekennzeichnet, dass** der Diffusor (49) auf seiner Außenseite eine Strukturierung umfasst, die ihn von der Außenseite in Richtung Gehäuse blickdicht macht und der Diffusor von der Gehäuseseite nach außen transluzent ist.

13. Waage, insbesondere Ladenwaage, nach einem der Ansprüche 10 bis 12, **dadurch gekennzeichnet, dass** der Diffusor (49) als Ring ausgebildet ist, der die Abmessungen des Gehäuses (18, 28) im Bereich der Aussparung (44) hat und formschlüssig an dem Gehäuse über der Aussparung (44) angebracht ist und insbesondere mit einem Rastmechanismus angebracht ist.

14. Waage, insbesondere Ladenwaage, nach einem der Ansprüche 10 bis 13, **dadurch gekennzeichnet, dass** der Diffusor (49) die Aussparung abdeckt und mit dem Gehäuse verklebt oder verschraubt ist.

15. Waage, insbesondere Ladenwaage, nach einem der Ansprüche 10 bis 14, **dadurch gekennzeichnet, dass** die Distanz zwischen den LED-Leuchtmitteln (43) und der Innenseite des Diffusors kleiner 3°mm, insbesondere kleiner 1°mm ist.

## Claims

1. Scales (10, 20), in particular load scales, having a weighing module, wherein the weighing module comprises a housing (18, 28), which accommodates a load cell (30), wherein the load cell (30) comprises a fixed section (31), a deformation section (32) and a movable section (33), wherein the fixed section (31) is connected to the housing (18, 28) and the movable section (33) carries a load cross (39) with a load plate (11, 21), wherein the deformation section (32) has a strain gauge (36) for measuring a weight acting on the load plate (11, 21), **characterized in that** the housing (18, 28) is formed in one piece in the shape of a trough, wherein a luminous strip (19, 29) is attached substantially circumferentially to the housing (18, 28) at the exterior wall (47) of the housing, and **in that** the scales comprise a control unit (51) which comprises a state machine (52) which depicts at least one technical state of the scales, wherein the control unit (51) controls the luminous strip (19, 29) on the basis of the state of the state machine (52) .

2. Scales, in particular load scales, according to Claim 1, wherein the luminous strip consists of a flexible carrier (42) on which the LED light-emitting means (43) are arranged, wherein the carrier (42) comprises in particular one to ten LED light-emitting means (43) per centimetre of length.

3. Scales, in particular load scales, according to Claim 2, **characterized in that** electrical lines for controlling the LED light-emitting means (43) are integrated in the flexible carrier (42) of the luminous strip (19, 29).

4. Scales, in particular load scales, according to Claim 2 or 3, **characterized in that** the LED light-emitting means (43) generate light in the wavelength range from 230 nm to 500 nm and are coated in particular with phosphor, wherein in particular the luminous strip (19, 29) is coated with phosphor on the side on which the LED light-emitting means (43) are attached.

5. Scales, in particular load scales, according to Claim 2 or 3, **characterized in that** the flexible carrier (42) comprises first, second and third LED light-emitting means (43), which generate light in the wavelength range from 450 nm to 500 nm, 500 nm to 570 nm or 610 nm to 760 nm, and the first, second and third LED light-emitting means (43) are arranged in regular arrangements on the carrier, wherein the first, second and third LED light-emitting means (43) are controlled in each case together as a group, and wherein in particular the luminous strip is coated with silicone on the side on which the LED light-emitting means (43) are attached.

6. Scales, in particular load scales, according to any of Claims 1 to 5, **characterized in that** the flexible carrier (42) has, on the side lying opposite the LED light-emitting means (43), a layer of adhesive material, in particular a layer of thermally conductive adhesive material, wherein the luminous strip is attached to the housing with the adhesive material, in particular is adhesively bonded thereto.

7. Scales, in particular load scales, according to Claim 6, **characterized in that** the housing (18, 28) is made from a metal casting and the adhesive material is bonded to a surface of the uncoated and/or coated metal casting.

8. Scales, in particular load scales, according to any of Claims 1 to 7, **characterized in that** the luminous strip (19, 29) is electrically connected to the control unit (51) and the luminous strip is controlled by the control unit with DC voltage in the range from 6 Volt to 36 Volt, in particular 12 Volt or 24 Volt.

9. Scales, in particular load scales, according to any of Claims 1 to 8, **characterized in that** the housing comprises a cutout or a single-side cutout (44), which is attached circumferentially in the upper housing region (18, 28) to the outer side (47) of the housing (18, 28), in which the luminous strip (19, 29) is adhesively bonded.

10. Scales, in particular load scales, according to Claim 9, **characterized in that** the scales comprise a diffuser (49) which is attached to the outside of the housing and covers the cutout (44).

11. Scales, in particular load scales, according to Claim 10, **characterized in that** the diffuser (49) consists of a translucent material, in particular of a translucent polycarbonate.

12. Scales, in particular load scales, according to Claim 11, **characterized in that** the diffuser (49) comprises on its outer side a structuring that renders the former opaque from the outside in the direction of the housing and the diffuser is translucent from the housing side to the outside.

13. Scales, in particular load scales, according to any of Claims 10 to 12, **characterized in that** the diffuser (49) is in the form of a ring which has the dimensions of the housing (18, 28) in the region of the cutout (44) and is attached form-fittingly at the housing over the cutout (44) and is attached in particular with a latch mechanism.

14. Scales, in particular load scales, according to any of Claims 10 to 13, **characterized in that** the diffuser (49) covers the cutout and is adhesively bonded or screw-connected to the housing.

15. Scales, in particular load scales, according to any of Claims 10 to 14, **characterized in that** the distance between the LED light-emitting means (43) and the inner side of the diffuser is smaller than 3 mm, in particular smaller than 1 mm.

## Revendications

1. Balance (10, 20), en particulier balance de magasin, dotée d'un module de pesée, le module de pesée comprenant un boîtier (18, 28) dans lequel est logée une cellule de pesée (30), la cellule de pesée (30) comprenant une portion fixe (31), une portion de déformation (32) et une portion mobile (33), la portion fixe (31) étant reliée au boîtier (18, 28) et la portion mobile (33) portant un croisillon de charge (39) pourvu d'un plateau de charge (11, 21), la portion de déformation (32) comportant une jauge de contrainte (36) destinée à mesurer un poids agissant sur le plateau de charge (11, 21), **caractérisée en ce que** le boîtier (18, 28) est réalisé d'une seule pièce et en forme d'auge, une bande lumineuse (19, 29), qui est fixée sensiblement tout autour du boîtier (18, 28), étant fixée à la paroi extérieure (47) du boîtier, et **en ce que** la balance comprend une unité de commande (51) qui comprend une machine d'état (52) qui représente au moins un état technique de la balance, l'unité de commande (51) commandant la bande lumineuse (19, 29) sur la base de l'état de la machine d'état (52).

2. Balance, notamment balance de magasin, selon la revendication 1, la bande lumineuse comprenant un support flexible (42) sur lequel sont disposées les lampes LED (43), le support (42) comprenant en particulier une à dix lampes LED (43) par cm de longueur.

3. Balance, notamment balance de magasin, selon la revendication 2, **caractérisée en ce que** des lignes électriques destinées à la commande des lampes LED (43) sont intégrées dans le support flexible (42) de la bande lumineuse (19, 29) .

4. Balance, en particulier balance de magasin, selon la revendication 2 ou 3, **caractérisée en ce que** les lampes LED (43) génèrent de la lumière dans la gamme de longueurs d'onde de 230 nm à 500 nm et sont notamment recouvertes de phosphore, en particulier la bande lumineuse (19, 29) du côté sur lequel les lampes LED (43) sont fixées étant recouverte de phosphore.

5. Balance, en particulier balance de magasin, selon la revendication 2 ou 3, **caractérisée en ce que** le support flexible (42) comprend des première, deuxième et troisième lampes LED (43) qui émettent de la lumière dans la gamme de longueurs d'onde de 450 nm à 500 nm, de 500 nm à 570 nm ou de 610 nm à 760 nm et les première, deuxième et troisième lampes LED (43) sont disposées suivant des dispositions régulières sur le support, les première, deuxième et troisième lampes LED (43) étant chacune commandées conjointement en groupe, et en particulier la bande lumineuse du côté sur lequel sont fixées les lampes LED (43) étant recouverte de silicone.

6. Balance, notamment balance de magasin, selon l'une des revendications 1 à 5, **caractérisée en ce que** le support flexible (42) comporte une couche de matière adhésive, notamment une couche de matière adhésive thermoconductrice, du côté opposé aux lampes LED (43), la bande lumineuse étant fixée, en particulier collée, au boîtier avec la matière adhésive.

7. Balance, notamment balance de magasin, selon la revendication 6, **caractérisée en ce que** le boîtier (18, 28) est en métal moulé et la matière adhésive adhère à une surface en métal moulé non revêtu et/ou revêtu.

8. Balance, notamment balance de magasin, selon l'une des revendications 1 à 7, **caractérisée en ce que** la bande lumineuse (19, 29) est reliée électriquement à l'unité de commande (51) et la bande lumineuse est alimentée par l'unité de commande en tension continue comprise entre 6 volts et 36 volts, notamment 12 volts ou 24 volts.

9. Balance, en particulier balance de magasin, selon l'une des revendications 1 à 8, **caractérisée en ce que** le boîtier comporte un évidement ou un évidement unilatéral (44) qui est ménagé tout autour dans la zone de boîtier supérieure (18, 28) du côté extérieur (47) du boîtier (18, 28), dans lequel la bande lumineuse (19, 29) est collée.

10. Balance, notamment balance de magasin, selon la revendication 9, **caractérisée en ce que** la balance comprend un diffuseur (49) qui est fixé à l'extérieur sur boîtier et qui recouvre l'évidement (44).

11. Balance, notamment balance de magasin, selon la revendication 10, **caractérisée en ce que** le diffuseur (49) est en une matière translucide, notamment en polycarbonate translucide.

12. Balance, notamment balance de magasin, selon la revendication 11, **caractérisée en ce que** le diffuseur (49) présente sur son côté extérieur une structuration qui le rend opaque dans le sens allant du côté extérieur vers le boîtier et le diffuseur est translucide dans le sens allant du côté du boîtier vers l'extérieur.

13. Balance, notamment balance de magasin, selon l'une des revendications 10 à 12, **caractérisée en ce que** le diffuseur (49) est conçu comme un anneau qui a les dimensions du boîtier (18, 28) dans la zone de l'évidement (44), qui est fixé par complémentarité de formes au boîtier par-dessus l'évidement (44) et qui est fixé en particulier avec un mécanisme d'encliquetage.

14. Balance, notamment balance de magasin, selon l'une des revendications 10 à 13, **caractérisée en ce que** le diffuseur (49) recouvre l'évidement et est collé ou vissé au boîtier.

15. Balance, notamment balance de magasin, selon l'une des revendications 10 à 14, **caractérisée en ce que** la distance entre les lampes LED (43) et le côté intérieur du diffuseur est inférieure à 3 mm, notamment inférieure à 1 mm.
